# FASCICULE DE BREVET EUROPEEN

(11) **EP 2 741 560 B1**
(45) Date de publication et mention de la délivrance du brevet: **27.07.2016**
(21) Numéro de dépôt: 13159611.6
(22) Date de dépôt: 15.03.2013
(51) Int. Cl.: H04W 92/02

(54) **Procédé d'intégration de station de base ou de commutateur de gestion, et dispositifs mettant en oeuvre un tel procédé**
Integrationsverfahren der Basisstation oder der Verwaltungsschaltung, und Vorrichtungen zur Umsetzung eines solchen Verfahrens
Method for integrating a base station or management switch, and devices implementing such a method

(30) Priorité: 05.12.2012 FR 1261697
(43) Date de publication de la demande: 11.06.2014
(73) Titulaire: Minot, Pierre, 91470 Les Molieres (FR)
(72) Inventeur: Minot, Pierre, 91470 Les Molières (FR); Ngouat, Pierre, 77230 Juilly (FR)
(74) Mandataire: Pontet Allano & Associes

(56) Documents cités:
- EP-A1- 2 387 186
- US-A1- 2007 041 360
- US-B1- 6 711 417

## Description

### Domaine technique

La présente invention concerne une méthode d'intégration de réseaux radio à la norme Européenne TETRA dans un réseau radio type EPS et LTE « Long Term Evolution ».

Cette invention permet d'utiliser des terminaux radio TETRA dans un tel réseau de 3^{ème} ou 4^{ème} génération ou plus, en offrant des services propres aux réseaux TETRA et des interconnexions directes avec les terminaux radio non TETRA tels que les terminaux radio de la famille 3GPP LTE.

### Etat de la technique antérieure

Les réseaux radio à la norme TETRA sont répandus dans le monde entier ; ils sont utilisés dans un cadre professionnel, particulièrement pour les besoins des forces de sécurité publique. Ces réseaux utilisent des bandes étroites de fréquence réservées, avec des canaux espacés de 25 kHz et offrent un ensemble très complet de fonctions ne nécessitant pas de fort débit. Les réseaux sont constitués de sites radio dont la portée est relativement importante.

A l'inverse, les réseaux radio de quatrième génération et plus, principalement basés sur la technologie 3GPP LTE Advanced, utilisent des sites radio de portée souvent inférieure sur des bandes de fréquence différentes, utilisées avec des canaux très larges offrant des services nécessitant des débits élevés.

La connexion de ces deux types de réseaux présente un fort intérêt.

Des documents US 6711417 B1 et US 2007/041360 A1, on connaît des procédés de connexion de réseaux.

Il a en particulier été envisagé de développer des terminaux radio aptes pour émettre et recevoir dans les deux modes (TETRA et LTE) configurés pour utiliser les réseaux LTE dès lors qu'ils sont couverts par ceux-ci et les réseaux TETRA dans le cas contraire. Ce procédé de connexion des deux types de réseaux présente néanmoins de nombreux inconvénients. En particulier, cette solution nécessite le changement complet des parcs de terminaux ainsi que la mise en place de passerelles de service haut niveau.

Il a par ailleurs été envisagé l'utilisation des réseaux 3GPP LTE comme couche de transport pour les réseaux TETRA : cette méthode présente également de nombreux inconvénients. En particulier, elle ne permet pas de liaison directe entre des terminaux radio LTE et des terminaux radio TETRA.

On connaît enfin des passerelles (« gateway ») entre un réseau TETRA et un réseau EPS avec accès radio LTE. Ces passerelles offrent de simples fonctions d'interconnexion de réseaux, sans pouvoir assurer une intégration réelle. Par exemple, la mobilité n'est pas gérée et un terminal appelant doit composer le numéro d'un correspondant en fonction du lieu où celui-ci est supposé se trouver.
La méthode ici présentée permet l'interconnexion complète de réseaux TETRA et de réseaux large bande radio de 3^{ème} ou 4^{ème} génération ou plus, tels que les réseaux à la norme 3GPP EPS mettant en oeuvre des accès radio de la famille LTE sans présenter les inconvénients précédemment cités tout en offrant des facilités de communication directes entre terminaux de technologies différentes et en offrant la possibilité d'optimiser l'utilisation du spectre radio.

Un but de la présente invention est de proposer un procédé et dispositif de connexion des réseaux TETRA et des réseaux radio de 3^{ème} ou 4^{ème} génération ou plus, typiquement basés sur la famille des normes EPS et 3GPP LTE, permettant une réutilisation de parcs de terminaux radio existant.
Un autre but de la présente invention est de proposer un procédé et dispositif de connexion des réseaux TETRA et des réseaux radio de 3^{ème} ou 4^{ème} génération ou plus, basés sur la famille des technologies 3GPP EPS et 3GPP LTE permettant la mise à disposition des services 'TETRA' existant. Un autre but de la présente invention est de proposer un procédé et dispositif de connexion des réseaux TETRA et des réseaux radio de 3^{ème} ou 4^{ème} génération ou plus, basés sur la famille des technologies 3GPP EPS et LTE, permettant une migration aisée lors de l'évolution d'un réseau TETRA vers un réseau de la famille des technologies 3GPP EPS et 3GPP LTE
Un autre but de la présente invention est de proposer un procédé et dispositif de connexion des réseaux TETRA et les réseaux de la famille des technologies 3GPP EPS et 3GPP LTE permettant une optimisation économique entre des réseaux de la famille technologique 3GPP EPS et 3GPP LTE en milieu urbain et des réseaux TETRA en milieu isolé, directement connectés entre eux.
Un autre but de la présente invention est de proposer un procédé et dispositif de connexion des réseaux TETRA et des réseaux radio de 3^{ème} ou 4^{ème} génération ou plus, 3GPP LTE permettant une réutilisation des canaux radiofréquences alloués à des réseaux TETRA (canaux à bande étroite) aux endroits où des canaux radio des réseaux de 3^{ème} ou 4^{ème} génération ou plus (canaux large bande), objet de l'interconnexion, fréquences LTE ne sont pas disponibles (ou aux endroits où il n'est pas rentable de déployer des réseaux radio de 3^{ème} ou 4^{ème} génération ou plus 3GPP LTE).

### Exposé de l'invention

On atteint au moins l'un des objectifs précités avec un procédé pour connecter un premier dispositif appartenant à un premier réseau de communication mobile du type à bande étroite, à un second réseau de communication mobile du type à large bande, ledit dispositif implémentant une couche protocolaire pour communiquer avec une première pluralité de terminaux mobiles selon une première norme de communication mobile, caractérisé en ce qu'il comprend une modification du premier dispositif par intégration d'une couche de transposition dans ladite couche protocolaire et est relié au second réseau de communication du type à large bande via une liaison du type « Internet Protocole » (IP). La pile protocolaire modifiée comprend les couches de transport normalisées et un module de transposition fonctionnel, typiquement implanté au niveau de la couche NAS (Non Access Stratum).

De plus, le procédé selon l'invention peut être mis en oeuvre pour établir des échanges entre des terminaux mobiles selon la première norme de communication mobile placés sous la gestion du premier dispositif modifié et d'autres terminaux mobiles selon ladite première norme de communication mobile placés sous la gestion d'un second dispositif modifié, via le second réseau de communication mobile du type à large bande.
De plus, le procédé selon l'invention peut être mis en oeuvre pour établir des échanges entre des terminaux mobiles selon la première norme de communication mobile placés sous la gestion du premier dispositif modifié et des terminaux mobiles selon la seconde norme de communication mobile placés sous la couverture de stations de base appartenant au second réseau de communication du type à large bande.

Dans une version particulière, le premier réseau de communication du type à bande étroite peut satisfaire la norme TETRA « TErrestrial Trunked Radio ».
De plus, le second réseau de communication du type à large bande peut satisfaire à une norme de la famille des technologies 3GPP EPS et LTE « Long Term Evolution ».

Avantageusement, la couche de transposition peut implémenter une interface normalisée S1 pour le Plan Contrôle de la norme 3GPP EPS et LTE. De plus, l'interface normalisée S1 peut être complétée par une interface normalisée X2 de la famille des technologies 3GPP EPS et pour une liaison entre stations de base proches.
De plus, l'interface normalisée S1 peut être complétée par une interface normalisée M1 de la famille des technologies 3GPP EPS et LTE.

Selon un autre aspect de l'invention, il est également proposé une station de base appartenant à un premier réseau de communication mobile du type à bande étroite, adaptée pour être connectée à un second réseau de communication mobile du type à large bande selon une seconde norme de communication mobile, ladite station de base implémentant une couche protocolaire pour communiquer avec une première pluralité de terminaux mobiles selon une première norme de communication mobile, caractérisée en ce que ladite station de base est modifiée par intégration d'une couche de transposition dans ladite couche protocolaire et est reliée audit second réseau de communication du type à large bande via une liaison du type « Internet Protocole » (IP).

De plus, la station de base selon l'invention peut être configurée pour établir des échanges entre des terminaux mobiles selon la première norme de communication mobile placés sous la gestion de ladite station de base et d'autres terminaux mobiles placés sous la gestion d'une autre station de base selon l'invention, via le second réseau de communication mobile du type à large bande.

De plus, la station de base selon l'invention peut être configurée pour établir des échanges entre des terminaux mobiles selon la première norme de communication mobile placés sous la couverture de ladite station de base et des terminaux mobiles selon la seconde norme de communication mobile placés sous la couverture de stations de base appartenant au second réseau de communication du type à large bande.
De plus, le second réseau de communication du type à large bande peut satisfaire la famille des technologies (normes) 3GPP EPS et LTE « Long Term Evolution ».
De plus, la couche de transposition peut implémenter une interface normalisée S1 de la famille des technologies 3GPP EPS et LTE.
De plus, l'interface normalisée S1 peut être complétée par une interface normalisée X2 de la famille des technologies 3GPP EPS et LTE.
De plus, l'interface normalisée S1 peut être complétée par une interface normalisée M1 de la famille des technologies 3GPP EPS et LTE.

Selon un autre aspect de l'invention, il est également proposé un commutateur de gestion (« SWITCH ») appartenant à un premier réseau de communication mobile du type à bande étroite, adapté pour être connecté à un second réseau de communication mobile du type à large bande selon une seconde norme de communication mobile, ledit commutateur implémentant une couche protocolaire pour communiquer avec une première pluralité de station de base selon une première norme de communication mobile, caractérisé en ce que ledit commutateur est modifié par intégration d'une couche de transposition dans ladite couche protocolaire et est relié audit second réseau de communication du type à large bande via une liaison du type « Internet Protocole » (IP).

Le commutateur peut être configuré pour établir des échanges entre des terminaux mobiles selon la première norme de communication mobile placés sous la gestion d'une station de base et d'autres terminaux mobiles placés sous la gestion d'un autre commutateur selon l'invention, via le second réseau de communication mobile du type à large bande.

Le commutateur selon l'invention peut être configuré pour établir des échanges entre des terminaux mobiles selon la première norme de communication mobile placés sous la couverture de ladite station de base et des terminaux mobiles selon la seconde norme de communication mobile placés sous la couverture de stations de base appartenant au second réseau de communication du type à large bande.
Le second réseau de communication du type à large bande peut satisfaire la norme 3GPP EPS et LTE « Long Term Evolution ».
La couche de transposition peut implémenter une interface normalisée S1 de la famille des technologies 3GPP EPS et LTE.
L'interface normalisée S1 peut être complétée par une interface normalisée X2 de la famille des technologies 3GPP EPS et LTE.
L'interface normalisée S1 peut être complétée par une interface normalisée M1 de la famille des technologies 3GPP EPS et LTE.

### Description des figures et modes de réalisation

D'autres avantages et particularités de l'invention apparaîtront à la lecture de la description détaillée de mises en oeuvre et d'un mode de réalisation nullement limitatif, et des dessins annexés suivants :
- la figure 1 est une représentation schématique d'un premier mode de réalisation d'un procédé selon l'invention dans lequel une station de base selon l'invention est représentée,
- la figure 2 est une représentation schématique d'un second mode de réalisation d'un procédé selon l'invention dans lequel un commutateur de gestion selon l'invention est représenté, et
- la figure 3 est une représentation schématique d'un mode de réalisation d'une station de base selon l'invention.

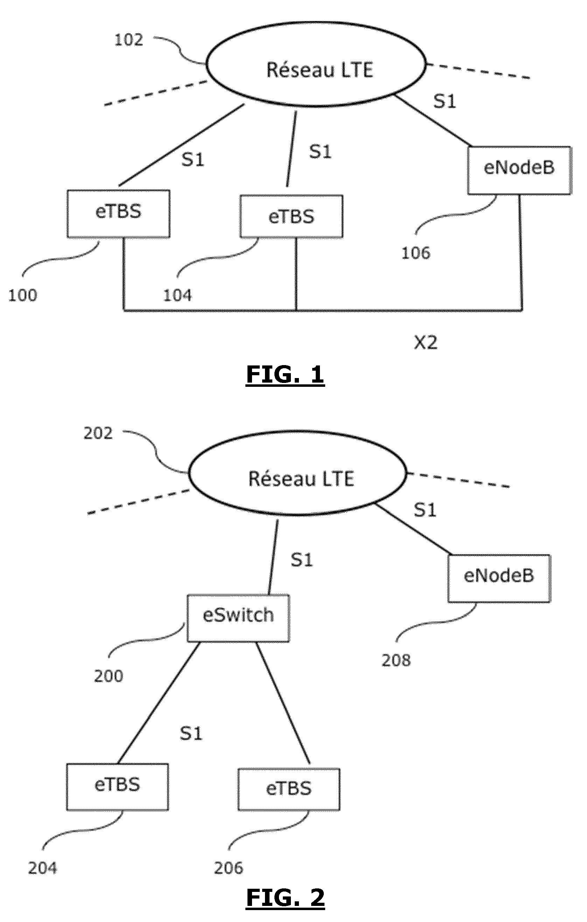

La figure 1 est une représentation schématique dans laquelle est représentée une interconnexion directe d'une station de base 100 selon l'invention avec un second réseau 102.
La station de base 100 appartient à un premier réseau de communication mobile du type à bande étroite. Elle est adaptée pour être connectée au second réseau 102 de communication mobile du type à large bande selon une seconde norme de communication mobile. Le second réseau 102 de communication du type à large bande satisfait la norme de 3^{ème} ou 4^{ème} génération ou plus, de la famille des technologies 3GPP EPS et LTE « Long Term Evolution ».
La station de base 100 implémente une couche protocolaire pour communiquer avec une première pluralité de terminaux mobiles (non représentés) selon la première norme de communication mobile. La station de base est modifiée par intégration d'une couche de transposition dans la couche protocolaire et est reliée audit second réseau de communication du type à large bande via une liaison du type « Internet Protocole » (IP). La couche de transposition implémente une interface normalisée S1 de la norme 3GPP EPS et LTE.
Elle est configurée pour établir des échanges entre des terminaux mobiles selon la première norme de communication mobile placés sous la gestion de celle-ci et d'autres terminaux mobiles placés sous la gestion d'une autre station de base selon l'invention, 104, via le second réseau de communication mobile du type à large bande.
La station de base 100 est configurée pour établir des échanges entre des terminaux mobiles selon la première norme de communication mobile placés sous la couverture de la station de base et des terminaux mobiles selon la seconde norme de communication mobile placés sous la couverture de stations de base 106 appartenant au second réseau de communication 102 du type à large bande.
La figure 1 illustre que l'interface normalisée S1 est complétée par une interface normalisée X2 de la famille des technologies 3GPP EPS et LTE 3GPP X2 reliant entre elles les stations de base 100, 104 et 106.

La figure 2 est une représentation schématique dans laquelle est représentée une interconnexion directe d'un commutateur de gestion 200 selon l'invention avec un second réseau 202.
Le commutateur de gestion (« eSwitch ») 200 appartient à un premier réseau de communication mobile du type à bande étroite. Il est adapté pour être connecté au second réseau de communication 202 mobile du type à large bande selon une seconde norme de communication mobile. Le second réseau de communication 202 du type à large bande satisfait une norme de 3^{ème} ou 4^{ème} génération ou plus, de la famille des technologies 3GPP EPS et la norme 3GPP LTE « Long Term Evolution ».
Le commutateur de gestion 200 implémente une couche protocolaire pour communiquer avec deux stations de base 204, 206, selon une première norme de communication mobile.
Le commutateur de gestion 200 est modifié par intégration d'une couche de transposition dans ladite couche protocolaire et est relié au second réseau de communication 202 du type à large bande via une liaison du type « Internet Protocole » (IP). La couche de transposition implémente une interface normalisée S1 de la norme spécifiée pour la famille des technologies 3GPP EPS et LTE. L'interface normalisée S1 est complétée par une interface normalisée X2 de la famille des technologies 3GPP EPS et LTE 3GPP X2 (non représentée). L'interface normalisée S1 peut est complétée par une interface normalisée M1 de la famille des technologies 3GPP EPS et LTE 3GPP M1 (non représentée).
Le commutateur de gestion 200 est configuré pour établir des échanges entre des terminaux mobiles selon la première norme de communication mobile (non représentés) placés sous la gestion des stations de base 204, 206 et d'autres terminaux mobiles placés sous la gestion d'un autre commutateur selon l'invention (non représenté), via le second réseau de communication mobile du type à large bande.

Le commutateur selon l'invention est également configuré pour établir des échanges entre des terminaux mobiles (non représentés) selon la première norme de communication mobile placés sous la couverture dudit commutateur de gestion et des terminaux mobiles (non représentés) selon la seconde norme de communication mobile placés sous la couverture d'une station de base 208 appartenant au second réseau de communication du type à large bande.

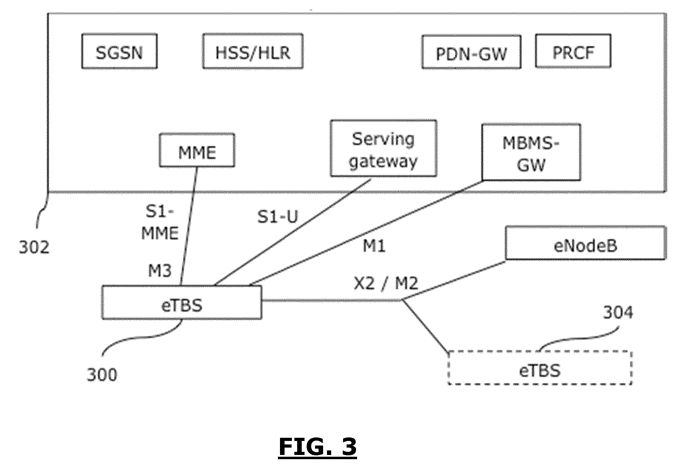

La figure 3 est une représentation schématique dans laquelle est représentée une interconnexion directe d'une station de base 300, dite eTbs, selon l'invention avec les équipements d'un réseau radio de 3^{ème} ou 4^{ème} génération ou plus, de la famille des technologies 3GPP EPS et 3GPP LTE 302.
La station de base 300 eTbs appartient à un premier réseau de communication mobile du type à bande étroite.
Elle est adaptée pour être connectée à un second réseau 302 de communication mobile du type à large bande selon une seconde norme de communication mobile. Le second réseau de communication du type à large bande satisfait une norme de 3^{ème} ou 4^{ème} génération ou plus, de la famille des technologies 3GPP EPS et la norme 3GPP LTE « Long Term Evolution. Le réseau de 3^{ème} ou 4^{ème} génération ou plus, de la famille des technologies 3GPP EPS et LTE 302 comprend des modules usuels présents dans un réseau de la famille des technologies 3GPP EPS et LTE tels que :
- un module SGSN : *Serving GPRS Support Node,* GPRS signifiant General Packet Radio Service ;
- un module HSS/HLR : Home Suscriber Server / Home Location Register ;
- un module PDN-GW : Packet Data Network GateWay ;
- un module PCRF : Policy and Charging Rules Function ;
- un module MME : Mobility Management Entity ;
- un module Serving Gateway ;
- un module MBMS-GW : Multimedia Broadcast Multicast Service GateWay.

Ainsi que l'illustre la figure 3, la station de base 300 eTbs comprend une couche de transposition qui implémente une interface normalisée S1 de la norme spécifiée pour la famille des technologies 3GPP EPS et LTE. On observe ainsi que la eTbs 300 est directement reliée au module MME par une interface 3GPP S1-MME/M3 de la famille des technologies 3GPP EPS et LTE. La eTbs 300 est directement reliée au module Serving Gateway par une interface S1-U de la famille des technologies 3GPP EPS et LTE. La eTbs 300 est directement reliée au module MBMS-GW par une interface M1. La station de base eTbs 300 est directement reliée à un eNobeB par une interface X2/M2 de la famille des technologies 3GPP EPS et LTE 3GPP X2/M2. Enfin, la station de base eTbs 300 est directement reliée à une autre station de base 304 selon l'invention, dite eTbs, par une interface X2/M2 de la famille des technologies 3GPP EPS et LTE 3GPP X2/M2.

Le tableau suivant présente pour chaque interface, le type d'interface, les caractéristiques de chaque extrémité, les caractéristiques protocolaires et les services SAE (« System Architecture Evolution »).

| **Nom de l'Interface** | **Type** | **Caractéristiques des extrémités** | | **Caractéristiques Protocolaires** | | **Services SAE** |
|---|---|---|---|---|---|---|
| | | **Extrémité 1** | **Extrémité 2** | **User Plane** | **Control Plane** | |
| ***E-UTRAN Uu*** | Air interface / Radio | Terminal UE | eNB | E-UTRA/LTE | | EPS/E-UTRAN EPS/eMBMS |
| | | | eTBS | E-UTRA/LTE | | EPS/eTER AN EPS/E-UTRAN EPS/eMB MS |
| ***TETRA*** | Air interface / Radio | Terminal MS | eTBS | TETRA | | EPS/ eTERAN eMBMS/e TERAN |
| ***S1*** | Filaire - IP | eTBS | MME | S1-U (GTP-U/UDP/IP) | **S1-MME (S1AP/SCTP/IP)** | EPS/TETRA |
| ***X2*** | Filaire - IP | eTBS | eTBS | **X2-U (GTP-U/UDP/IP)** | **X2-C (X2AP/SCTP/IP)** | EPS/eTER AN eTERAN/eTERAN |
| | | | eNB | **X2-U (GTP-U/UDP/IP)** | **X2-C (X2AP/SCTP/IP)** | EPS/eTER AN eTERAN/ E-UTRAN |
| ***M1*** | Filaire - IP | eTBS | eMBMS-GW | **M1 (GTP-U/UDP/IP)** | *Non applicable* | eMBMS/eTERAN |
| ***M2*** | Filaire - IP | eTBS/MCE (Entité eTBS hébergeant l'entité logique MCE) | eTBS | *Non applicable* | **M2 (M2AP/SCTP/IP)** | eMBMS/eTERAN |
| | | | eNB | *Non applicable* | **M2 (M2AP/SCTP/IP)** | eMBMS/eTERAN |
| ***M3*** | Filaire - IP | eTBS/MCE (Entité eTBS hébergeant l'entité logique MCE) | MME | *Non applicable* | **M3 (M3AP/SCTP/IP)** | eMBMS/eTERAN |

Les terminaux TETRA sous couverture de la station de base 100 eTBS selon l'invention sont décrits dans le module HSS ou HLR du réseau de 3^{ème} ou 4^{ème} génération ou plus, de la famille des technologies 3GPP EPS et GPP LTE.
Ainsi, chaque terminal TETRA dispose d'un numéro IMSI identique à ceux utilisés pour les réseaux de 3^{ème} ou 4^{ème} génération ou plus, de la famille des technologies 3GPP EPS et 3GPP LTE.
Ainsi, la station de base 100, eTBS, selon l'invention permet une intégration complète des réseaux TETRA et des réseaux de 3^{ème} ou 4^{ème} génération ou plus, de la famille des technologies 3GPP EPS et 3GPP LTE.
La mobilité est assurée à deux niveaux :
- par le réseau de 3^{ème} ou 4^{ème} génération ou plus, de la famille des technologies 3GPP EPS et LTE qui localise (dans sa base de données HSS/HLR) la localisation du sous réseau TETRA directement connecté au réseau de 3^{ème} ou 4^{ème} génération ou plus, de la famille des technologies 3GPP EPS et 3GPP LTE, et
- par le sous réseau TETRA qui localise le site radio sur lequel le mobile est inscrit.
Dans le cas où le sous réseau TETRA n'est constitué que d'un seul site radio, ce mécanisme se simplifie au sein du sous réseau TETRA.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour connecter un premier dispositif (100, 106 ; 200 ; 300) appartenant à un premier réseau de communication mobile du type à bande étroite, à un second réseau (102 ; 202 ; 302) de communication mobile du type à large bande selon une seconde norme de communication mobile, ledit dispositif implémentant une couche protocolaire pour communiquer avec une première pluralité de terminaux mobiles (204, 206) selon une première norme de communication mobile, **caractérisé en ce que** la seconde norme de communication mobile satisfait la famille des normes 3GPP EPS et LTE et **en ce que** le procédé comprend une modification dudit premier dispositif par intégration d'une couche de transposition qui implémente une interface normalisée 3GPP S1 pour le Plan Contrôle des normes 3GPP EPS et LTE dans ladite couche protocolaire et est reliée audit second réseau de communication du type à large bande via une liaison du type Internet Protocole.

2. Procédé selon la revendication 1, caractérisé en qu'il est mis en oeuvre pour établir des échanges entre des terminaux mobiles selon la première norme de communication mobile placés sous la gestion du premier dispositif modifié et d'autres terminaux mobiles selon ladite première norme de communication mobile placés sous la gestion d'un second dispositif modifié, via le second réseau de communication mobile du type à large bande.

3. Procédé selon l'une des revendications 1 ou 2, **caractérisé en ce qu'**il est mis en oeuvre pour établir des échanges entre des terminaux mobiles selon la première norme de communication mobile placés sous la gestion du premier dispositif modifié et des terminaux mobiles selon la seconde norme de communication mobile placés sous la couverture de stations de base appartenant au second réseau de communication du type à large bande.

4. Procédé selon l'une quelconque des revendications précédentes,
**caractérisé en ce que** le premier réseau de communication du type à bande étroite satisfait la norme TETRA « TErrestrial Trunked Radio ».

5. Procédé selon l'une quelconque des revendications précédentes,
**caractérisé en ce que** l'interface normalisée 3GPP S1 est complétée par une interface normalisée 3GPP X2 pour une liaison entre stations de base proches.

6. Procédé selon l'une quelconque des revendications précédentes,
**caractérisé en ce que** l'interface normalisée 3GPP S1 est complétée par une interface normalisée 3GPP M1.

7. Station de base (100, 106 ; 300) appartenant à un premier réseau de communication mobile du type à bande étroite, adaptée pour être connectée à un second réseau (102, 302) de communication mobile du type à large bande selon une seconde norme de communication mobile, ladite station de base implémentant une couche protocolaire pour communiquer avec une première pluralité de terminaux mobiles selon une première norme de communication mobile,
**caractérisée en ce que** la seconde norme de communication mobile satisfait la familles des normes 3GPP EPS et LTE « Long Term Evolution » et **en ce que** ladite station de base est modifiée par intégration d'une couche de transposition qui implémente une interface normalisée 3GPP S1 pour le Plan Contrôle des normes 3GPP EPS et LTE dans ladite couche protocolaire et est reliée audit second réseau de communication du type à large bande via une liaison du type « Internet Protocole ».

8. Station de base selon la revendication 7, caractérisée en qu'elle est configurée pour établir des échanges entre des terminaux mobiles selon la première norme de communication mobile placés sous la gestion de ladite station de base et d'autres terminaux mobiles placés sous la gestion d'une autre station de base selon la revendication 7, via le second réseau de communication mobile du type à large bande.

9. Station de base selon la revendication 7 ou 8, **caractérisée en ce qu'**elle est configurée pour établir des échanges entre des terminaux mobiles selon la première norme de communication mobile placés sous la couverture de ladite station de base et des terminaux mobiles selon la seconde norme de communication mobile placés sous la couverture de stations de base appartenant au second réseau de communication du type à large bande.

10. Station de base selon l'une quelconque des revendications 7 à 9,
**caractérisée en ce que** la couche de transposition implémente une interface normalisée S1 de la norme 3GPP LTE.

11. Station de base selon l'une quelconque des revendications 7 à 10,
**caractérisée en ce que** l'interface normalisée 3GPP S1 est complétée par une interface normalisée 3GPP X2.

12. Station de base selon l'une quelconque des revendications 7 à 11,
**caractérisée en ce que** l'interface normalisée 3GPP S1 est complétée par une interface normalisée 3GPP M1.

13. Commutateur de gestion (200) appartenant à un premier réseau de communication mobile du type à bande étroite, adapté pour être connecté à un second réseau de communication mobile du type à large bande (202) selon une seconde norme de communication mobile, ledit commutateur implémentant une couche protocolaire pour communiquer avec une première pluralité de station de base (204, 206) selon une première norme de communication mobile,

## Patentansprüche

1. Verfahren zum Verbinden einer ersten Vorrichtung (100, 106; 200; 300), die zu einem ersten Mobilfunknetz vom schmalbandigen Typ gehört, mit einem zweiten Mobilfunknetz (102; 202; 302) vom breitbandigen Typ gemäß einem zweiten Mobilfunkstandard, wobei die Vorrichtung eine Protokollschicht implementiert, um mit einer ersten Vielzahl von mobilen Endgeräten (204, 206) gemäß einem ersten Mobilfunkstandard zu kommunizieren,
**dadurch gekennzeichnet, dass** der zweite Mobilfunkstandard die Familie der Standards 3GPP EPS und LTE erfüllt und dass das Verfahren eine Modifizierung der ersten Vorrichtung durch Integration einer Umsetzungsschicht umfasst, welche eine genormte 3GPP S1-Schnittstelle für die Kontrollebene der Standards 3GPP EPS und LTE in der Protokollschicht implementiert und mit dem zweiten Kommunikationsnetz vom breitbandigen Typ über eine Verbindung vom Typ Internet Protocole verbunden ist.

2. Verfahren nach Anspruch 1, **dadurch gekennzeichnet, dass** es durchgeführt wird, um einen Austausch zwischen mobilen Endgeräten gemäß dem ersten Mobilfunkstandard, die von der modifizierten ersten Vorrichtung verwaltet werden, und anderen mobilen Endgeräten gemäß dem ersten Mobilfunkstandard, die von einer modifizierten zweiten Vorrichtung verwaltet werden, über das zweite Mobilfunknetz vom breitbandigen Typ herzustellen.

3. Verfahren nach einem der Ansprüche 1 oder 2, **dadurch gekennzeichnet, dass** es durchgeführt wird, um einen Austausch zwischen mobilen Endgeräten gemäß dem ersten Mobilfunkstandard, die von der modifizierten ersten Vorrichtung verwaltet werden, und mobilen Endgeräten gemäß dem zweiten Mobilfunkstandard, die von Basisstationen, welche zu dem zweiten Kommunikationsnetz vom breitbandigen Typ gehören, abgedeckt sind, herzustellen.

4. Verfahren nach einem der vorhergehenden Ansprüche, **dadurch gekennzeichnet, dass** das erste Kommunikationsnetz vom schmalbandigen Typ den Standard TETRA "TErrestrial Trunked Radio" erfüllt.

5. Verfahren nach einem der vorhergehenden Ansprüche, **dadurch gekennzeichnet, dass** die genormte 3GPP S1-Schnittstelle durch eine genormte 3GPP X2-Schnittstelle für eine Verbindung zwischen nahe gelegenen Basisstationen ergänzt ist.

6. Verfahren nach einem der vorhergehenden Ansprüche, **dadurch gekennzeichnet, dass** die genormte 3GPP S1-Schnittstelle durch eine genormte 3GPP M1-Schnittstelle ergänzt ist.

7. Basisstation (100, 106; 300), die zu einem ersten Mobilfunknetz vom schmalbandigen Typ gehört, die dazu ausgelegt ist, mit einem zweiten Mobilfunknetz (102, 302) vom breitbandigen Typ gemäß einem zweiten Mobilfunkstandard verbunden zu werden, wobei die Basisstation eine Protokollschicht implementiert, um mit einer ersten Vielzahl von mobilen Endgeräten gemäß einem ersten Mobilfunkstandard zu kommunizieren,
**dadurch gekennzeichnet, dass** der zweite Mobilfunkstandard die Familie der Standards 3GPP EPS und LTE "Long Term Evolution" erfüllt und dass die Basisstation durch Integration einer Umsetzungsschicht, welche eine genormte 3GPP S1-Schnittstelle für die Kontrollebene der Standards 3GPP EPS und LTE in der Protokollschicht implementiert, modifiziert ist und mit dem zweiten Kommunikationsnetz vom breitbandigen Typ über eine Verbindung vom Typ "Internet Protocole" verbunden ist.

8. Basisstation nach Anspruch 7, **dadurch gekennzeichnet, dass** sie dazu ausgelegt ist, einen Austausch zwischen mobilen Endgeräten gemäß dem ersten Mobilfunkstandard, die von der Basisstation verwaltet werden, und anderen mobilen Endgeräten, die von einer anderen Basisstation gemäß Anspruch 7 verwaltet werden, über das zweite Mobilfunknetz vom breitbandigen Typ herzustellen.

9. Basisstation nach Anspruch 7 oder 8, **dadurch gekennzeichnet, dass** sie dazu ausgelegt ist, einen Austausch zwischen mobilen Endgeräten gemäß dem ersten Mobilfunkstandard, die von der Basisstation abgedeckt sind, und mobilen Endgeräten gemäß dem zweiten Mobilfunkstandard, die von Basisstationen, welche zu dem zweiten Kommunikationsnetz vom breitbandigen Typ gehören, abgedeckt sind, herzustellen.

10. Basisstation nach einem der Ansprüche 7 bis 9, **dadurch gekennzeichnet, dass** die Umsetzungsschicht eine genormte S1-Schnittstelle des Standards 3GPP LTE implementiert.

11. Basisstation nach einem der Ansprüche 7 bis 10, **dadurch gekennzeichnet, dass** die genormte 3GPP S1-Schnittstelle durch eine genormte 3GPP X2-Schnittstelle ergänzt ist.

12. Basisstation nach einem der Ansprüche 7 bis 11, **dadurch gekennzeichnet, dass** die genormte 3GPP S1-Schnittstelle durch eine genormte 3GPP M1-Schnittstelle ergänzt ist.

13. Vermittlungsstelle (200), die zu einem ersten Mobilfunknetz vom schmalbandigen Typ gehört, die dazu ausgelegt ist, mit einem zweiten Mobilfunknetz vom breitbandigen Typ (202) gemäß einem zweiten Mobilfunkstandard verbunden zu werden, wobei die Vermittlungsstelle eine Protokollschicht implementiert, um mit einer ersten Vielzahl von Basisstationen (204, 206) gemäß einem ersten Mobilfunkstandard zu kommunizieren,
**dadurch gekennzeichnet, dass** der zweite Mobilfunkstandard die Familie der Standards 3GPP EPS und LTE "Long Term Evolution" erfüllt und dass die Vermittlungsstelle durch Integration einer Umsetzungsschicht, welche eine genormte 3GPP S1-Schnittstelle für die Kontrollebene der Standards 3GPP EPS und LTE in der Protokollschicht implementiert, modifiziert ist und mit dem zweiten Kommunikationsnetz vom breitbandigen Typ über eine Verbindung vom Typ "Internet Protocole" verbunden ist.

## Claims

1. Method for connecting a first device (100, 106; 200; 300) belonging to a first mobile communications network of the narrow band type to a second mobile communications network (102; 202; 302) of the wide band type according to a second mobile communications standard, said device implementing a protocol layer for communicating with a first plurality of mobile terminals (204, 206) according to a first mobile communications standard,
**characterized in that** the second mobile communications standard complies with the 3GPP EPS and LTE family and **in that** the method comprises a modification of said first device by integration of a transposition layer which implements a standardized 3GPP S1 interface for the Control Plane of the 3GPP EPS and LTE standards in said protocol layer and is linked to said second communications network of the wide band type via a link of the Internet Protocol type.

2. Method according to claim 1, **characterized in that** it is implemented for establishing exchanges between mobile terminals according to the first mobile communications standard placed under the management of the first modified device and other mobile terminals according to said first mobile communications standard placed under the management of a second modified device, via the second mobile communications network of the wide band type.

3. Method according to one of claims 1 or 2, **characterized in that** it is implemented for establishing exchanges between mobile terminals according to the first mobile communications standard placed under the management of the first modified device and mobile terminals according to the second mobile communications standard placed under the cover of base stations belonging to the second communications network of the wide band type.

4. Method according to any one of the preceding claims, **characterized in that** the first communications network of the narrow band type complies with the "Terrestrial Trunked Radio" TETRA standard.

5. Method according to any one of the preceding claims, **characterized in that** the standardized 3GPP S1 interface is completed by a standardized 3GPP X2 interface for a link between close base stations.

6. Method according to any one of the preceding claims, **characterized in that** the 3GPP S1 standardized interface is completed by a standardized 3GPP M1 interface.

7. Fixed station (100, 106; 300) belonging to a first mobile communications network of the narrow band type, adapted for being connected to a second mobile communications network (102, 302) of the wide band type according to a second mobile communications standard, said fixed station implementing a protocol layer for communicating with a first plurality of mobile terminals according to a first mobile communications standard,
**characterized in that** the second mobile communications standard complies with the 3GPP EPS and LTE "Long Terme Evolution" family and **in that in that** said fixed station is modified by integration of a transposition layer which implements a standardized 3GPP S1 interface for the Control Plane of the 3GPP EPS and LTE standards in said protocol layer and is linked to said second communications network of the wide band type via a link of the Internet Protocol type.

8. Fixed station according to claim 7, **characterized in that** it is configured for establishing exchanges between mobile terminals according to the first mobile communications standard placed under the management of said fixed station and other mobile terminals placed under the management of another fixed station according to claim 7, via the second mobile communications network of the wide band type.

9. Fixed station according to one of claim 7 or 8, **characterized in that** it is configured for establishing exchanges between mobile terminals according to the first mobile communications standard placed under the cover of said fixed station and mobile terminals according to the second mobile communications standard placed under the cover of base stations belonging to the second communications network of the wide band type.

10. Fixed station according to any one of claim 7 to 9, **characterized in that** the transposition layer implements a standardized S1 interface of the 3GPP LTE standard.

11. Fixed station according to any one of claim 7 to 10, **characterized in that** the standardized 3GPP S1 is completed by a standardized 3GGP X2 interface.

12. Fixed station according to any one of claim 7 to 11, **characterized in that** the standardized 3GPP S1 interface is completed by a standardized 3GPP M1 interface.

13. Fixed radio sub-system (200) belonging to a first mobile communications network of the narrow band type, adapted for being connected to a second mobile communications network of the wide band type (202) according to a second mobile communications standard, said fixed radio sub-system implementing a protocol layer for communicating with a first plurality of fixed stations (204, 206) according to a first mobile communications standard,
**characterized in that** the second mobile communications standard complies with the 3GPP EPS and LTE "Long Term Evolution" family and **in that** said fixed radio sub-system is modified by integration of a transposition layer which implements a standardized 3GPP S1 interface for the Control Plane of the 3GPP EPS and LTE standards in said protocol layer and is linked to said second communications network of the wide band type via a link of the Internet Protocol type.
